# EUROPEAN PATENT APPLICATION

(11) **EP 2 921 972 A1**
(43) Date of publication of application: **23.09.2015**
(21) Application number: 14460016.0
(22) Date of filing: 18.03.2014
(51) Int. Cl.: G06F 17/30, G06Q 10/08, G06K 9/62

(54) **Computer-implemented system and method for identifying objects on an image**

(71) Applicant: Lab4motion Solutions Spolka z ograniczona odpowiedzialnoscia, 61-842 Poznan (PL)
(72) Inventor: Graj, Milosz, 64-730 Wielen (PL)
(74) Representative: Pankowski, Jacek

(57) **Abstract**

A computer-implemented method for identifying objects on an analyzed image (101), the method comprising: providing model images (102) of objects to be identified on the analyzed image (101); recognizing the objects on the analyzed image (101); providing an output data structure (151) defining areas of the analyzed image (101) occupied by the recognized objects. The method further comprises: defining a tree data structure (131) comprising nodes (121), each node (121) comprising: a reference to an object recognition algorithm configured to recognize a model image (102) on the analyzed image (101); and if the node (121) is a leaf node of the tree (131), a reference to at least one model image (102); and recognizing the objects on the analyzed image (101) by traversing the tree data structure (131) and executing the object recognition algorithms defined at the nodes (121).

## Description

### FIELD OF INVENTION

The present invention relates to identifying objects on a stationary or motion image, which is particularly applicable to detecting planograms.

### BACKGROUND

A planogram is a diagram that indicates the placement of retail products on shelves, which dictates a retail store's layout. The planogram is therefore known to the store operator. However, third parties may be also interested to learn about a planogram at a given store, to extract the planogram on the basis of the real placement of the products on shelves. This task can be done manually by observing the shelves and drawing the planogram by hand, which is a time-consuming task. Attempts have been made to extract planograms from photographs (images) of shelves, in order to automatically identify positioning of objects on the image and create a planogram corresponding to the image.

A PCT application WO2009027839 relates to planogram extraction based on image processing, wherein image analysis techniques, including object recognition analysis, are applied to images obtained by one or more image capture devices deployed within inventory environments. The object recognition analysis provides object recognition data (that may include one or more recognized product instances) based on stored product (training) images.

A US patent application US20140003729 presents a method for automatically constructing a planogram from photographs of shelving, wherein a product detection step enhances traditional image recognition techniques, using artificial learning techniques to incorporate characteristics specific to the planograms. The product detection step includes at least two successive classification steps, namely: an initialization step with detection of product categories; and a classification step with the classification of the products themselves, each of these steps including a first image recognition step, followed by a statistical filtering step based on the characteristics specific to the planograms.

Detection of objects on images in order to construct planograms is only an exemplary application of object identification on images. The present invention is therefore not limited to constructing planograms, but relates in general to object detection, while construction of planograms is presented only as an example application of the presented system and method.

It would be advantageous to further improve the known object identification systems and methods, and in particular to further improve the known methods for creating a planogram based on an image.

### SUMMARY

There is presented a computer-implemented method for identifying objects on an analyzed image, the method comprising: providing model images of objects to be identified on the analyzed image; recognizing the objects on the analyzed image; providing an output data structure defining areas of the analyzed image occupied by the recognized objects. The method further comprises: defining a tree data structure comprising nodes, each node comprising: a reference to an object recognition algorithm configured to recognize a model image on the analyzed image; and if the node is a leaf node of the tree, a reference to at least one model image; and recognizing the objects on the analyzed image by traversing the tree data structure and executing the object recognition algorithms defined at the nodes.

Preferably, the object recognition algorithm for at least one node comprises recognizing model images referenced at all children nodes of that node.

Preferably, the object recognition algorithm for at least one node comprises analyzing only the areas of the analyzed image that have not been recognized yet by algorithms at other nodes.

Preferably, the method comprises executing in parallel the object recognition algorithms for at least two nodes at the same level in the tree data structure.

There is also presented a computer program comprising program code means for performing all the steps of the computer-implemented method according to the present invention when said program is run on a computer, as well as a computer readable medium storing computer-executable instructions performing all the steps of the computer-implemented method according to the present invention when executed on a computer.

There is further presented a computer-implemented system for identifying objects on an analyzed image, the system comprising: a main server communicatively connected with a main database, the main database configured to store: an image to be analyzed; model images of objects to be identified on the analyzed image; image recognition algorithms a tree data structure comprising nodes, each node comprising: a reference to an object recognition algorithm configured to recognize a model image on the analyzed image; and if the node is a leaf node of the tree, a reference to at least one model image; and an output data structure defining areas of the analyzed image occupied by the recognized objects. At least one computing server is communicatively connected with a local database, the local database configured to store: an image to be analyzed; model images of objects to be identified on the analyzed image; image recognition algorithm; and an output data structure defining areas of the analyzed image occupied by the recognized objects. The main server is configured to traverse the tree data structure and pass the object recognition algorithm defined at a particular node to be processed at the computing server along with the representation of the image to be analyzed and representation of the model images to be identified on the analyzed image; and the computing servers are configured to determine the output data structure based on the data obtained from the main server.

Preferably, the main server is configured to pass to the computing servers model images of all children nodes of the node being processed.

Preferably, the main server is configured to pass to the computing servers the output data structure already processed by other nodes.

Preferably, the main server is configured to pass data related to at least two nodes at the same level in the tree data structure via a resource sharing server to a plurality of computing servers operating in parallel.

### BRIEF DESCRIPTION OF DRAWINGS

Further details and features of the present invention, its nature and various advantages will become more apparent from the following detailed description of the preferred embodiments shown in a drawing, in which:
Fig. 1A shows an example of an analyzed image of a store shelf;
Fig. 1B shows a corresponding planogram and Fig. 1C shows exemplary model images;
Fig. 2 shows a system for identifying objects on an image;
Fig. 3 shows an example of a tree data structure;
Fig. 4 shows an algorithm for recognizing objects on analyzed image;
Fig. 5 shows an algorithm for handling object recognition for a particular node.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DESCRIPTION OF EMBODIMENTS

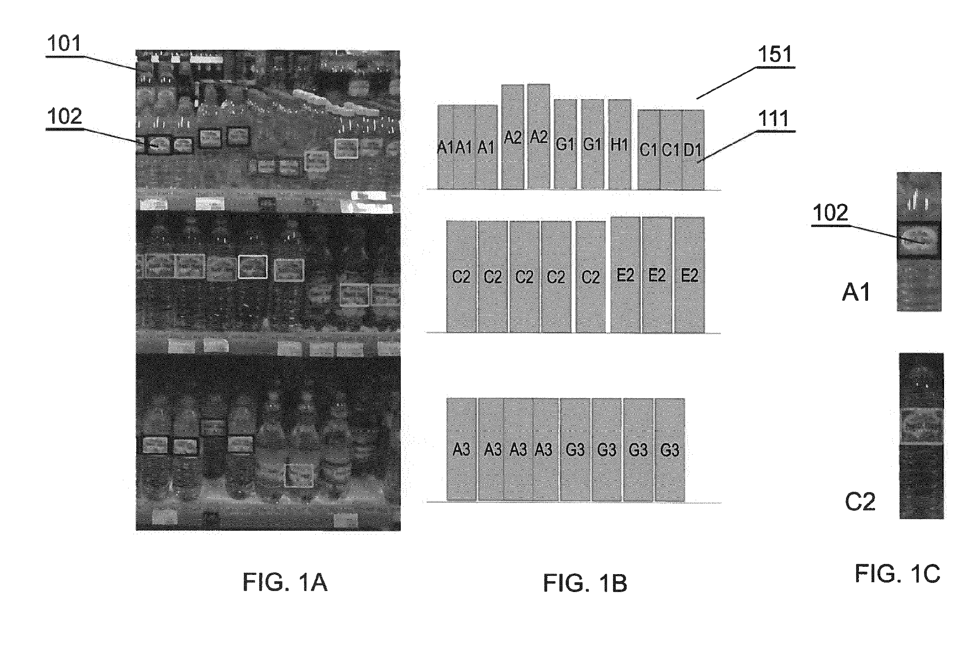

Fig. 1A shows an example of an image 101 of a store shelf to be analyzed, wherein various bottles are positioned. Fig. 1B shows a corresponding planogram, which defines areas 111 of the analyzed image 101 occupied by the recognized objects corresponding to model images 102. Fig. 1C shows exemplary model images for objects A1, C2.

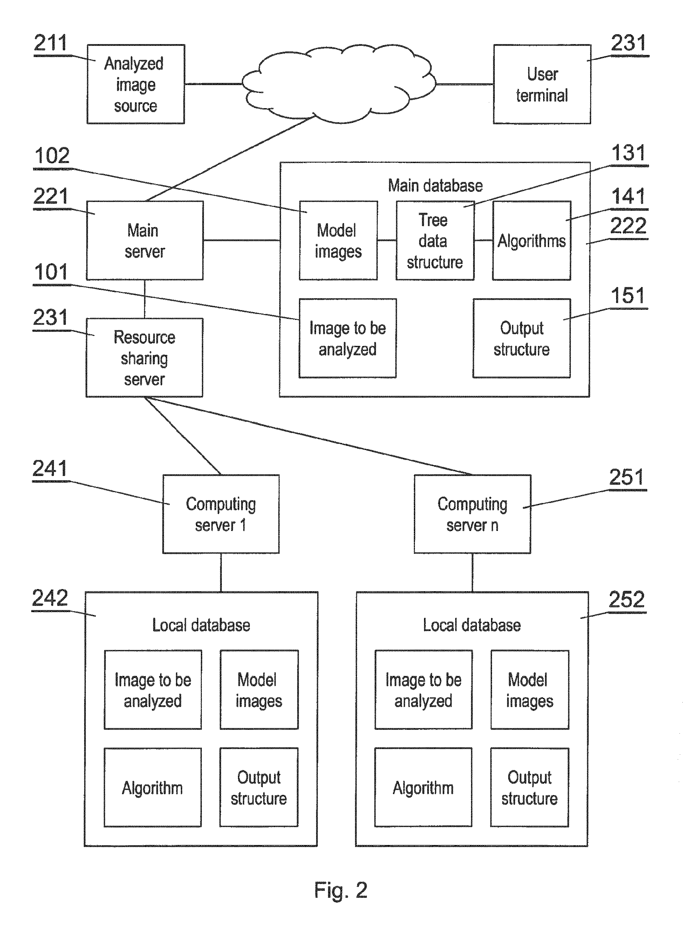

Fig. 2 shows a computer-implemented system for identifying objects on an image. Elements of the system may be stand-alone computers or shared-resource servers, communicating with each other via wired or wireless interfaces. In one embodiment, the elements of the system may form a closed network of interconnections. In another embodiment, the elements of the system may be shared resources of a cloud computing network.

The system may be realized using dedicated components or custom made FPGA or ASIC circuits.

An image to be analyzed is provided from an image source 211, such as a photo camera, a video camera, electronic glasses or other wearable devices, an element of a surveillance system etc.

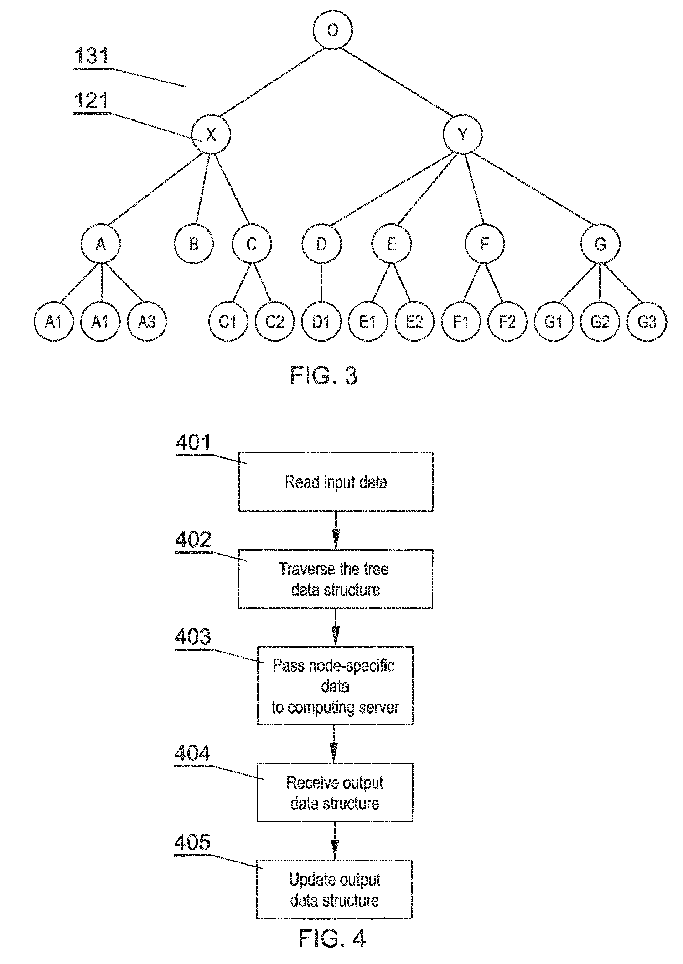

The image to be analyzed is input to a main server 221 which is responsible for managing the process. The main server 221 is communicatively connected with a database 222 configured to store the image to be analyzed 101, model images 102 to be identified on the analyzed image 101 (as shown in Fig. 1C), definition of tree data structure 131 (as shown in Fig. 3) and definitions of algorithms 141. The database 222 further comprises an output data structure 151 describing the areas of the analyzed image 101 occupied by the recognized objects. For example, the output data structure 151 may have a form of a text file, of an image with marked-up areas corresponding to the recognized objects, of a planogram of a predetermined structure.

The database 222 stores, for the image to be analyzed 101 and model images 102, a direct representation (such as a bitmap file) or a converted representation, e.g. most characteristic points, vectors or any other characteristic features.

The main server can be communicated with via a user terminal 231, e.g. a remote computer operating a user interface application, via which the user may input the data stored in the database 222. For example, the user may define the structure of the tree 131, define the algorithms 141 and/or input the image to be analyzed 101 or the model images 102.

The main server 221 is configured to operate the algorithm of Fig. 4. It traverses the tree data structure 131 and handles execution of the object recognition algorithms defined at the nodes to a plurality of computing servers 241, 251. This can be done via a resource sharing server 231, which determines the computing servers 241, 251 e.g. depending on the availability of the computing resources at servers 241, 251, complexity of the algorithm, amount of data to be processed etc.

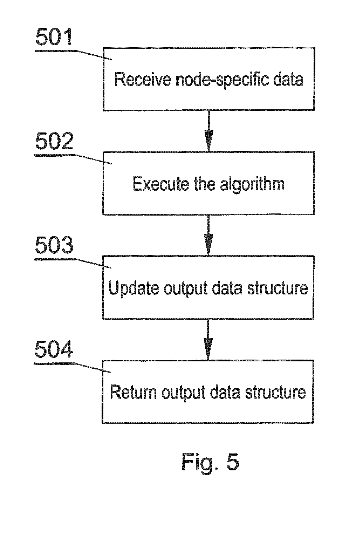

The computing servers 241, 251 are preferably configured to operate independently of each other, in order to run algorithms in parallel to speed up the object recognition process, according to the procedure of Fig. 5. Each computing server comprises a local database 242, 252 in which there are stored: representation of the image to be analyzed 101, representation of model images 102 to be identified on the analyzed image 101 and a definition of the algorithm 141 to be executed. These data are provided from the main server 221 depending on the configuration of the given node of the tree structure 131. In addition, the main server 221 may provide to the computing server the most recently computed version of the output data structure 151, such as to exclude from image recognition the areas that have been already recognized by running the algorithms at other nodes. After the computing server 241, 251 executes the particular algorithm 141, it updates the output data structure 151 and returns it to the main server 221.

The functionality of the computing server 241, 251 may be also embedded in the main server, so that a single server handles the whole process, which is particularly useful for images which do not require high processing power for analysis.

Fig. 3 shows an example of a tree data structure 131. The data structure comprises a plurality of nodes 121 - a root node (O), internal nodes (X, Y, A, C, D, E, F, G) and leaf nodes (A1, A2, A3, B, C 1, C2, D 1, E 1, E2, F 1, F2, G1, G2, G3). The internal nodes have children nodes. All nodes, apart from the root node, have a parent node. For example, the tree data structure 131 may describe various types of bottled drinks. Node X can be a parent node for drinks without gas and node Y for drinks with gas. Node A can be a parent node for water without gas, node B can be a node for a drink with flavour B and node C can be a node for a drink with flavour C. Nodes A1, A2, A3, C1, C2 can refer to bottles of different sizes. Node D can be a parent node for water with gas, wherein D1 represents a particular size of a bottle. Nodes E, F, G, can represent particular flavoured drinks with gas, having children nodes relating to different sizes. All leaf nodes comprise a reference to an image corresponding to a particular object type.

Each node comprises a reference to an object recognition algorithm 141 configured to recognize a model image on the analyzed image. Leaf nodes comprise a reference to at least one model image 102. Optionally, the root node and/or internal nodes may also comprise a reference to at least one model image 102.

Such structure allows to use different types of object recognition algorithms at different levels of recognizing the image. The algorithms of higher-level nodes (i.e. closer to the root) may be algorithms that require less processing power - in order to quickly recognize the most distinguishable elements. On the other hand, the algorithms of lower-level nodes may be the most precise algorithms, which are adapted to recognize the objects that have not been recognized at the higher level nodes.

Fig. 4 shows a procedure for recognizing the objects on the analyzed image. First, in step 401, the input data are read by the main server 221: the representation of the image to be analyzed 101, representation of the model images 102 to be identified on the analyzed image 101 and definition of tree data structure 131. Next, in step 402, the procedure continues by tree traversal, i.e. walking the tree (preferably in a level-order). For each node, it passes in step 403 instructions to a computing server 241, by providing the representation of the image to be analyzed 101, representation of the model images 102 to be identified on the analyzed image 101 and the algorithm 141 defined for the particular node. Furthermore, it can pass the latest version of the output data structure 151. The model image 102 may be the images defined for the particular node. Alternatively, the model images 102 for that particular node and its all children nodes may be passed as model images to be recognized. In step 404 the procedure receives the output data structure 151 computed by the computing server 241 based on the data for the given node. In step 405 it updates the output data structure stored in the database 222. In case of conflict, when two nodes operating in parallel return output data structures which define overlapping areas as belonging to different objects, this conflict can be appropriately marked in the output structure for further analysis, e.g. manual, by the user. The procedure continues until the whole tree is traversed.

Alternatively, instead of sending to the computing server data related to a particular node, the main server may order the computing server to analyze a plurality of nodes, e.g. a particular node and its all children nodes.

Fig. 5 shows a procedure for handling operations related to a particular node at the computing server 241, 251. In step 501, the computing server receives node-specific data from the main server 221 and stores them in the local database 242, 252. Next, in step 502 it detects objects by executing the algorithm defined for the particular node to recognize the one or model images 102 provided. The output data structure 151 is updated in step 503 and sent back to the main server in step 504.

It can be easily recognized, by one skilled in the art, that the aforementioned method for marking objects on a stationary or motion image may be performed and/or controlled by one or more computer programs. Such computer programs are typically executed by utilizing the computing resources in a computing device such as personal computers, personal digital assistants, cellular telephones, dedicated controllers or the like. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for identifying objects on an analyzed image (101), the method comprising:
- providing model images (102) of objects to be identified on the analyzed image (101);
- recognizing the objects on the analyzed image (101);
- providing an output data structure (151) defining areas of the analyzed image (101) occupied by the recognized objects;
wherein the method further comprises:
- defining a tree data structure (131) comprising nodes (121), each node (121) comprising:
- a reference to an object recognition algorithm configured to recognize a model image (102) on the analyzed image (101); and
- if the node (121) is a leaf node of the tree (131), a reference to at least one model image (102); and
- recognizing the objects on the analyzed image (101) by traversing the tree data structure (131) and executing the object recognition algorithms defined at the nodes (121).

2. The method according to claim 1, wherein the object recognition algorithm for at least one node (121) comprises recognizing model images (102) referenced at all children nodes of that node (121).

3. The method according to claim 1, wherein the object recognition algorithm for at least one node (121) comprises analyzing only the areas of the analyzed image (101) that have not been recognized yet by algorithms at other nodes (121).

4. The method according to claim 1, comprising executing in parallel the object recognition algorithms for at least two nodes (121) at the same level in the tree data structure (131).

5. A computer program comprising program code means for performing all the steps of the computer-implemented method according to any of claims 1-4 when said program is run on a computer.

6. A computer readable medium storing computer-executable instructions performing all the steps of the computer-implemented method according to any of claims 1-4 when executed on a computer.

7. A computer-implemented system for identifying objects on an analyzed image (101), the system comprising:
- a main server (221) communicatively connected with a main database (222), the main database configured to store:
- an image to be analyzed (101);
- model images (102) of objects to be identified on the analyzed image (101);
- image recognition algorithms (141)
- a tree data structure (131) comprising nodes (121), each node (121) comprising:
- a reference to an object recognition algorithm configured to recognize a model image (102) on the analyzed image (101); and
- if the node (121) is a leaf node of the tree (131), a reference to at least one model image (102); and
- an output data structure (151) defining areas of the analyzed image (101) occupied by the recognized objects;
- at least one computing server (241, 251) communicatively connected with a local database (242, 252), the local database configured to store:
- an image to be analyzed (101);
- model images (102) of objects to be identified on the analyzed image (101);
- image recognition algorithm (141); and
- an output data structure (151) defining areas of the analyzed image (101) occupied by the recognized objects;
- wherein the main server (221) is configured to traverse the tree data structure (131) and pass the object recognition algorithm defined at a particular node (121) to be processed at the computing server (241, 251) along with the representation of the image to be analyzed (101) and representation of the model images (102) to be identified on the analyzed image (101); and
- wherein the computing servers (241, 251) are configured to determine the output data structure (151) based on the data obtained from the main server (221).

8. The system according to claim 7, wherein the main server (221) is configured to pass to the computing servers (241, 251) model images (102) of all children nodes of the node (121) being processed.

9. The system according to claim 7, wherein the main server (221) is configured to pass to the computing servers (241, 251) the output data structure (151) already processed by other nodes (121).

10. The system according to claim 9, wherein the main server (221) is configured to pass data related to at least two nodes (121) at the same level in the tree data structure (131) via a resource sharing server (231) to a plurality of computing servers (241, 251) operating in parallel.
